# EUROPÄISCHE PATENTANMELDUNG

(11) **EP 0 527 299 A2**
(43) Veröffentlichungstag der Anmeldung: **17.02.1993**
(21) Anmeldenummer: 92108564.3
(22) Anmeldetag: 21.05.1992
(51) Int. Cl.: H02M 7/521

(54) **Einrichtung zur Einspeisung von Gleichstrom in elektrische Versorgungsnetze**

(30) Priorität: 09.08.1991 DE 4126353
(71) Anmelder: Deutsche Aerospace AG, D-81663 München (DE)
(72) Erfinder: Wnendt, Jürgen, Dipl.-Ing., W-8725 Arnstein-Gönheim (DE)

(57) **Zusammenfassung**

Die Erfindung bezieht sich auf eine Einrichtung gemäß dem Gattungsbegriff des Anspruches 1 in Form einer elektronischen Schaltung zur Einspeisung von Strom in das öffentliche Netz von Elektrizitätsversorgungsunternehmen (EVU), wobei die Schaltung geeignet ist, einen halbsinusförmig pulsierenden Gleichstrom in einen sinusförmigen Wechselstrom umzuwandeln und diesen in das Wechselspannungsnetz der EVU's einzuspeisen. Durch die vorgeschlagene extrem einfache, sichere und zuverlässige Schaltung können kleine, leichte und billige Wechselrichter - beispielsweise für die Umsetzung von Solarstrom ins Netz - gebaut werden. Ein Ausführungsbeispiel ist beschrieben und gezeichnet.

## Beschreibung

Die Erfindung bezieht sich auf eine Einrichtung zur Einspeisung von Gleichstrom in elektrische Versorgungsnetze gemäß dem Gattungsbegriff des Anspruches 1.

Es ist bekannt, daß Strom aus Solarzellen oder aus Wasserstoff-Sauerstoff-Brennzellen prinzipbedingt Gleichstrom ist. Um nun an ein öffentliches Netz Energie abgeben zu können, ist es erforderlich, diesen Gleichstrom in einen netzsynchronen und phasenrichtigen Wechselstrom umzuwandeln. Hierbei erfolgt dies beim Stand der Technik durch Bestückung der Netzeinspeiseseite durch übliche Wechselrichter mit einer Thyristorbrücke, wobei jeder Thyristor einzeln oder paarweise aktiv durch eine eigene Ansteuerelektronik versehen und zum richtigen Zeitpunkt eingeschaltet werden muß.

Der vorliegenden Erfindung liegt die Aufgabe zugrunde, eine Einrichtung der eingangs genannten Art zu schaffen, die ohne zusätzliche Schaltungsmaßnahmen zuverlässig einen pulsierenden Gleichstrom in einen sinusförmigen Wechselstrom umwandelt und diesen weitgehend verlustlos in ein Wechselspannungsnetz eines Elektrizitätsversorgungsunternehmens (EVU) einspeist.

Diese Aufgabe wird durch die im Anspruch 1 aufgezeigten Maßnahmen gelöst. In den Unteransprüchen sind vorteilhafte Ausgestaltungen und Weiterbildungen angegeben. In der nachfolgenden Beschreibung ist ein Ausführungsbeispiel erläutert und in den Figuren der Zeichnung skizziert. Es zeigen:
- Fig. 1: ein Schaltbild eines Wechselrichters mit Triacs in vereinfachter Darstellung,
- Fig. 2: ein Schaltbild der Triac-Pinbelegung.

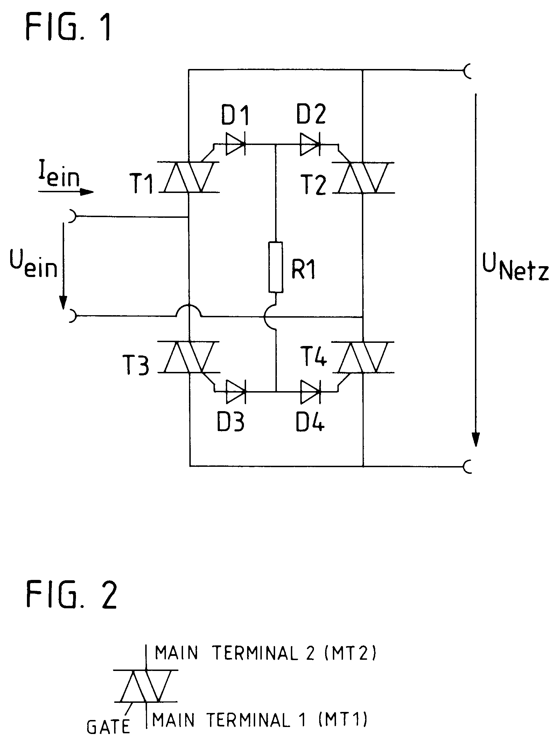

Der in Fig. 1 in einem Schaltbild skizzierte Wechselrichter setzt sich aus vier Triacs (T1 bis T4), vier Dioden (D1 bis D4) und einem Widerstand R1 zusammen, wobei jedes dieser Elemente auch gleichzeitig die Funktion eines Schaltelements ausführt.

Bei positiver Spannung U_{netz} fließt ein Zündstrom durch die Gates der Triacs T1 und T4, denn nur die Dioden D1 und D4 sind in Durchlaßrichtung gepolt. Der Zündstrom fließt daher von der oberen Netzleitung durch den Kontakt MT1 (Main Terminal 1) des Triacs T1 zum Gate, durch die in Durchlaßrichtung gepolte Diode D1, durch den Widerstand R1, durch die in Durchlaßrichtung gepolte Diode D4, durch das Gate von Triac T4, durch MT1 des Triacs T4 zur unteren Netzleitung. Da für positive Polarität der Netzspannung die Dioden D2 und D3 gesperrt sind, können T2 und T3 nicht zünden.

Wenn nun Iₑᵢₙ jetzt positiv ist, dann wird Strom in das Netz eingespeist. Hierbei ist Uₑᵢₙ jetzt positiv und größer als die Netzspannung.

Die Triacs werden wieder abgeschaltet indem Iₑᵢₙ zu Null gesteuert wird. Dazu wird Uₑᵢₙ kurz vor dem Nulldurchgang der Netzspannung weggenommen. Dadurch werden die gerade noch leitenden Triacs gelöscht. Das dafür nötige Pulsieren von Iₑᵢₙ/Uₑᵢₙ kann beispielsweise relativ einfach erreicht werden, indem der sowieso vorhandene Vorregler mit der Netzfrequenz moduliert wird.

Bei der negativen Halbwelle der Netzspannung wird T2 und T3 durch die dann leitenden Dioden D2 und D3 gezündet. T1 und T4 sind dann gesperrt, da sowohl D1 als auch D4 in Sperr-Richtung gepolt sind.

Das Einspeisen oder Abschalten der Triacs geschieht wie bei der positiven Halbwelle der Netzspannung.

Ein Merkmal dieser Schaltung ist, daß alle Triacs im vierten Quadranten ihrer Kennlinie gezündet werden. Der Widerstand R1 - der in der Zeichnung zur Vereinfachung als ohm'scher Widerstand skizziert worden ist - ist als Netzwerk ausgebildet, das den Zündstrom der Triacs begrenzt und diese auch erst ab einer - festzulegenden - Netzspannung zündet. Würde ein ohm'scher Widerstand eingesetzt, dann ergäbe sich eine zu große Verlustleistung.

Durch die vorbeschriebene Schaltung wird nun erreicht, daß grundsätzlich nur die richtigen Leistungsschalter (Triacs) zum richtigen Zeitpunkt netzsynchron und phasenrichtig einschalten.

Ein wesentlicher Vorteil ist weiterhin, daß die Triacs direkt vom Netz gesteuert werden und darum bei einem Netzausfall gar nicht erst zünden. Die Schaltung ist daher nicht geeignet, ohne anliegende Netzwechselspannung Energie einzuspeisen. Sie ist daher schon ohne zusätzliche Schaltungsmaßnahmen sehr sicher, wogegen beim Stand der Technik die Forderung besteht gesonderte Einrichtungen zu schaffen, die Netzeinspeisungsgeräte bei Netzausfall vom Netz trennt.

## Patentansprüche

1. Einrichtung zur Einspeisung von Gleichstrom z.B. aus Solarzellen oder aus Wasserstoff-Sauerstoff-Brennzellen in elektrische Versorgungsnetze durch Umwandlung in einen Wechselstrom über eine Anordnung von Leistungsschalter und einem Vorregler, **dadurch gekennzeichnet**, daß als Leistungsschalter Triacs eingesetzt werden, deren phasenrichtige und netzsynchrone Ansteuerung implizit allein durch ihre Anordnung in der Schaltung erfolgt, die vier Triacs (T1 bis T4), vier Dioden (D1 bis D4) und einen Widerstand (R1) umfaßt und jedes dieser Elemente gleichzeitig auch Schaltelement ist, wobei der vorhandene Vorregler mit der Netzfrequenz moduliert wird.

2. Einrichtung nach Anspruch 1, **dadurch gekennzeichnet**, daß die Triacs (T1 bis T4) jeweils im vierten Quadranten ihrer Kennlinie gezündet werden.

3. Einrichtung nach Anspruch 1 oder 2, **dadurch gekennzeichnet**, daß der Widerstand (R1) als Netzwerk ausgebildet ist, das den Zündstrom der Triacs (T1 bis T4) begrenzt und erst bei einer bestimmten einstellbaren Netzspannung zündet.
